# EUROPEAN PATENT SPECIFICATION

(11) **EP 2 632 072 B1**
(45) Date of publication and mention of the grant of the patent: **02.11.2016**
(21) Application number: 12305202.9
(22) Date of filing: 22.02.2012
(51) Int. Cl.: H04L 1/18

(54) **Apparatuses, methods, and computer programs for a remote unit and for a central unit of a base station transceiver**
Vorrichtungen, Verfahren und Computerprogramme für eine Ferneinheit und eine Zentraleinheit eines Sende-/Empfangsgeräts einer Basisstation
Appareil, procédé et programmes informatiques pour une unité distante et une unité centrale d'une station émettrice-réceptrice d'une station de base

(43) Date of publication of application: 28.08.2013
(73) Proprietor: ALCATEL LUCENT, 92100 Boulogne-Billancourt (FR)
(72) Inventor: Doll, Mark, 70469 Stuttgart (DE); Doetsch, Uwe, 74392 Freudental (DE); Schaich, Frank, 70469 Stuttgart, Feuerbach (DE)
(74) Representative: Wetzel, Emmanuelle

(56) References cited:
- EP-A1- 2 110 955
- WO-A2-2004/025887
- US-A1- 2007 072 646
- US-A1- 2011 075 616

## Description

Embodiments of the present invention relate to mobile communications, more particularly to mobile communication networks using remote units and central units in base station transceivers.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU), which is also referred to as Remote Radio Head (RRH), and a Central Unit (CU), connected either by electrical or optical links through a backhaul network.

The RU comprises a Radio Frequency (RF) frontend, i.e. analog transmit and receive RF components. For the UpLink (UL) path the RU comprises a receive antenna, which can be reused as transmit antenna for the DownLink (DL) signals. Moreover, in the uplink path the RU comprises filters corresponding to the uplink bandwidth and frequency as well as a Low Noise Amplifier (LNA). In the downlink path, the respective downlink filters are comprised together with a Power Amplifier (PA) and a transmit antenna, which can be identical with the receive antenna of the uplink path.

The resulting architecture is also referred to as Centralized Radio Access Network (C-RAN) and is a candidate for future wireless cellular network deployments. With C-RAN parts of the processing/protocol stack, which is performed directly at the radio sites in conventional RAN, is shifted to the CU. One option is to do the split between Layer 1 (L1) or PHYsical layer (PHY) and Layer 2 (L2) or Medium Access Control (MAC). In this case signal generation/detection is performed at the radio site, i.e. at the RU. Steps associated with higher layers, such as multi-user scheduling, are performed centrally at the CU.

Document WO 2004/025887 A2 provides system and method for providing access to a communication network, which includes providing a radio node comprising a first set of access point components including a radio component, and providing a physically separated controller node in communication with the radio node. The access point controller comprises a second set of access point components distinct from the first set of access point components, creating a distributed access point. A system controller may also be used to control at least one of the radio node and the controller node. The radio node, the controller node, and the system controller communicate over a communication link, such as a wireless or wired link.

### Summary

Embodiments are based on the finding that one issue a C-RAN has to deal with, is to meet the stringent timing specifications of the underlying radio system, as e.g. Long Term Evolution (LTE) or LTE-Advanced (LTE-A). For a processing loop, which includes both L1 and L2 mechanisms, the transport delay occurring between the RU and CU may consume parts of the available timing budget. An example of a stringent timing budget is the LTE or LTE-A UL synchronous Hybrid Automatic Retransmission reQuest (HARQ) scheme. Here, retransmissions are carried out when a reception of a data packet has failed. The retransmission may comprise additional or incremental redundancy or it may comprise a retransmission of an original data packet for combining. Details on the protocol layering and HARQ can be found in the respective 3^{rd} Generation Partnership (3GPP) specifications. Here, periodicity of transmissions/retransmissions is 8ms. In between a control message has to be exchanged reporting the success/failure of a given transmission/retransmission. Thus, the system has a budget of 4ms between the reception of the data and the transmission of the respective control message. As the system has to detect the complete sub-frame carrying the respective transmission/retransmission before being able to start decoding the data, 1ms is already consumed from this budget due to the timing definitions of LTE/LTE-A. Within the remaining 3ms the complete eNodeB (eNB) processing has to be finished. For a C-RAN the additional transport delays between RU and CU should be included in the 3ms processing time window. Embodiments may enable a less latency sensitive architecture for C-RAN.

Embodiments can be further based on the finding that a faked ACKnowledgement (ACK) could be sent from the RU to the CU. By sending an ACK, irrespective of the successful reception of the respective transmission, a HARQ process can be suspended. When the reception has been finally processed, the HARQ process can be resumed by a scheduling grant/allocation either with a retransmission or a transmission of new user data within the next transmission opportunity, i.e. 8ms later.

In Uplink (UL), synchronous HARQ is applied in LTE, LTE-A. Each of the 8 HARQ processes per UE has one transmission opportunity every 8 sub-frames. By missing the 3ms processing deadline, only every second UL transmission opportunity is usable per HARQ process per UE, halving the achievable per UE peak rate as well as maximum rate for transmit power limited cell edge UEs. The processing (incl. transport) time budget may be increased by 8ms from 3ms to 11ms.

In Downlink (DL), asynchronous HARQ is applied and the respective HARQ process can be resumed at any time. So, in DL, the UE peak rate is reduced, with the factor depending on the actual required processing/communication time.

Moreover, embodiments can be based on the finding that Transmission Time Intervals (TTIs) can be bundled and combined with the above faked ACKs. E.g. 4 consecutive sub-frames can be bundled into one transmission and acknowledged altogether. Since the number of HARQ processes is decreased to 4, there is one transmission of 4 sub-frames every 16 sub-frames per HARQ process. A faked ACK is sent 4ms after the last frame, but processing can last until next scheduling allocation is sent, which occurs 4 sub-frames before the next transmission opportunity, i.e. 5ms after the faked ACK, resulting in a total processing time budget of 9ms. It is a further finding that the UE peak rate may be reduced by about a factor of 4, as the maximum transport block size is designed for a single sub-frame transmission and not for 4 sub-frames. Furthermore, the scheduling flexibility may be reduced.

It is a further finding that Downlink Control Information (DCI) format 4 can be used for single layer transmissions, although it was introduced in Release-10 (Rel-10) of the LTE specifications (LTE-A) for spatial multiplexing. This might double the number of HARQ processes per UE to 16, somewhat mitigating the drawbacks of the faked ACKs, but introducing other drawbacks as it is only usable for Rel-10 (LTE-A) UEs. Moreover, an increased DCI size/resource usage results on the Physical Downlink Control CHannel (PDCCH), thereby less UEs are schedulable per sub-frame. It is a further finding that in consequence DCI format 4 may not be usable in combination with spatial multiplexing.

Embodiments can be based on the finding of common drawbacks of the above findings. The average end-to-end latency on the application layer increases as HARQ retransmissions occur every 16ms instead of 8ms after the preceding (re-)transmission for the UL. In the DL the latency can be smaller except for the case of TTI bundling when assuming the same number of required retransmissions. Especially for low latency Quality of Service (QOS) Class Identifiers (QCI) like QCI 4, which requires 50ms latency end-to-end, i.e. between the UE and the Policy and Charging Enforcement Function (PCEF), which is located at the boundary between Evolved Packet Core (EPC) and the global Internet, HARQ retransmissions may rapidly deplete the available end-to-end latency budget.

It is a further finding, that another possibility for relaxing transport delay requirements without increasing processing speed within CU and RU is to configure UEs with larger than necessary timing advances. An increase of up to 100km worth 0.67ms minus the delay for the actual cell size can be achieved. Compared to the above concepts the achieved timing relaxation is one order of magnitude smaller. This small amount even further decreases towards zero as the cell radius increases towards 100km. Increasing the timing advance is therefore not as advantageous for a latency tolerant C-RAN but rather a tool to implement a non-latency tolerant "standard" C-RAN - at least in case of FDD. In case of TDD, spectral efficiency is reduced due to a required longer guard period at the downlink-to-uplink switching point.

Embodiments can be further based on the finding that the MAC-layer can be split such that time or delay critical decisions on retransmissions can be made in the RU, i.e. closer to the air interface. Embodiments may therefore provide the advantage that the delay introduced on the interface between the RU and the CU does not affect the delay of retransmission decisions. Embodiments therefore introduce a transmission selection unit (TSU) at the RU, which may carry out retransmission decisions based on more delay tolerant control information, which is provided by the CU. At the CU other MAC functions such as scheduling can be carried out. The TSU may align the scheduling decision in the CU with possible retransmission for which the information may only be available at the RU.

Embodiments provide an apparatus for a remote unit of a base station transceiver in a mobile communication system, i.e. embodiments may provide said apparatus to be operated by or included in a remote unit. Embodiments may also provide a remote unit comprising the remote unit apparatus. In the following, the apparatus will also be referred to as remote unit apparatus. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), e.g. Universal Mobile Telecommunication System (UMTS), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Code Division Multiple Access (CDMA), Orthogonal Frequency Division Multiple Access (OFDMA) or any other technology with a multiplexing capable physical layer like Filter Bank Based Multicarrier (FBMC) systems. In the following the terms mobile communication system and mobile communication network are used synonymously.

In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc., which is subdivided in the remote unit and the central unit.

The remote unit apparatus comprises first means for communicating with a mobile transceiver associated to the remote unit. The first means for communicating may correspond to an air interface compliant with any of the above listed communication systems; it may correspond to a compliant receiver, a transmitter, a transceiver, a PHY, etc. The mobile transceiver can be associated with the RU, which may establish a cell. The term cell refers to a coverage area of radio services provided by the RU, a base station transceiver or a NodeB, an eNodeB, respectively. In some embodiments a cell may correspond to a sector. For example, sectors can be achieved using sector antennas, which provide a characteristic for covering an angular section around a RU or base station transceiver. In some embodiments, a RU may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The remote unit and the central unit can be located at different geographical locations. In other words, the central unit and the remote unit can be separated and can be interconnected, for example, by fiber optics or any wired link. In other embodiments the remote unit and the central unit can also be interconnected using a wireless link, e.g. a high data rate radio connection. The remote unit apparatus comprises second means for communicating with the central unit. The second means for communicating can correspond to a wired or a wireless interface. In some embodiments it may correspond to the Common Public Radio Interface (CPRI) standard, which defines an interface of base stations between the Radio Equipment Controllers (REC) or CU in the standard, to local or remote radio units, known as Radio Equipment (RE) or RU. In further embodiments the second means may correspond to an interface to a packet switched network, e.g. Internet Protocol (IP) via Ethernet IEEE 802.3.

The second means for communicating is operable to receive control information from the CU. The control information comprises information on a retransmission of data between the RU and the mobile transceiver. That is to say, the CU provides control information, which comprises information on how a retransmission should be handled. The remote unit apparatus comprises a transmission selection unit, which is operable to determine whether a data transmission between the RU and the mobile transceiver has failed. The transmission selection unit is further operable to initiate a retransmission of data, for which a failed data transmission was determined, at the first means for communicating based on the control information.

Correspondingly, embodiments provide an apparatus for the CU of the base station transceiver in the mobile communication system, i.e. embodiments may provide said apparatus to be operated by or included in the CU. Embodiments may also provide a CU comprising the central unit apparatus. In the following, the apparatus will also be referred to as central unit apparatus. The central unit apparatus comprises means for generating the control information, which comprises information on a retransmission of data between the RU and the mobile transceiver. The central unit apparatus further comprises means for providing the control information to the RU for enabling the RU to decide on a data retransmission based on the control information when a failed data transmission between the remote unit and the mobile transceiver is determined.

In some embodiments the transmission procedure between the mobile transceiver and the RU can be carried out as described in the following. In the CU a scheduler distributes the resources based on a scheduling algorithm taking into account possible retransmissions. That is to say, the central unit apparatus comprises means for allocating radio resources for a transmission of data between the RU and the mobile transceiver. Furthermore, the means for providing can be operable to provide information on allocated radio resources to the RU. In other words, in embodiments scheduling decisions may be carried out at the CU, such as which mobile transceiver is served with which radio resources in the DL, which mobile transceiver gets to transmit data on which radio resources in the UL, respectively.

Then the CU can provide the RU with the control information for a retransmission, in some embodiments as well as with control information on a transmission of new data. The new transmission could possibly be to a different UE; in case of DL, the CU may also provide the user data, i.e. the payload data for transmission. Hence, in embodiments the means for providing can be operable to provide control information for a transmission of new data to the remote unit. The second means for communicating can be operable to receive control information for a transmission of new data. The transmission selection unit can be operable to indicate a new transmission to the first means for communicating when a data transmission between the RU and the mobile transceiver was successful.

Furthermore, the means for providing can be operable to provide payload data for transmission, e.g. for a new transmission or a retransmission, from the remote unit to the mobile transceiver to the remote unit. Moreover, the second means for communicating can be operable to receive payload data for transmission from the remote unit to the mobile transceiver. The transmission selection unit can be operable to provide the payload data for a new transmission to the first means for communicating when a data transmission from the RU to the mobile transceiver was successful. The control information may comprise two payload data packets, one payload data packet for a retransmission and one payload data packet for a new transmission. In embodiments the transmission selection unit can then decide on whether a new transmission or a retransmission is carried out and forward the appropriate payload data packet to the first means for communicating, e.g. the PHY.

The procedure at the RU can then be the following, assuming an LTE or LTE-A system, any system using Hybrid Automatic Retransmission reQuest (HARQ), respectively. If the preceding transmission within a given HARQ process has failed, i.e. a Negative ACKnowledgement (NACK) was received from the UE for a DL transmission, or the PHY indicated a failed Cyclic Redundancy Check (CRC) for an UL transmission, the TSU forwards control information for a retransmission to the PHY. Otherwise control information for a transmission of new data can be indicated to the PHY.

In other words, the transmission selection unit can be operable to determine whether a data transmission has failed based on a cyclic redundancy check of data received from the mobile transceiver. The transmission selection unit can be operable to determine whether a data transmission has failed based on a negative acknowledgment information received from the mobile transceiver.

The RU may then inform the CU about the selection it has made, so that the CU can correctly prepare the next (re-)transmission. That is to say, the transmission selection unit can be operable to indicate to the second means for communicating that a retransmission was indicated to the first means for communicating. The second means for communicating can be operable to transmit information on the indication on the retransmission to the CU. Accordingly, the transmission selection unit can be operable to indicate to the second means for communicating that a new transmission was indicated to the first means for communicating. The second means for communicating can be operable to transmit information on the indication of the new transmission to the CU. The central unit apparatus can be operable to receive the respective indication. The central unit apparatus may comprise means for receiving information on an indication on a retransmission between the RU and the mobile transceiver from the RU. The means for receiving can be operable to receive information on an indication of a new transmission between the RU and the mobile transceiver from the RU.

In further embodiments the transmission selection unit can be operable to initiate a retransmission for data, for which a failed data transmission was determined and for which the control information lacks information on a retransmission. That is to say, the central unit may configure the remote unit apparatus or the transmission selection unit on how to react in case of transmissions for which no control information is provided. In some embodiments a retransmission may be initiated for data, for which no further information is provided. In another embodiment the transmission selection unit can be operable or configured to suspend a transmission or to schedule data of another mobile transceiver for data, for which a failed data transmission was determined and for which the control information lacks information on a retransmission.

In another embodiment the means for providing at the central unit can be operable to provide payload data for transmission from the remote unit to the mobile transceiver to the remote unit in advance. The remote unit apparatus may then comprise a data buffer for buffering payload data. This may enable payload data buffering at the remote unit. The control information may then comprise information on payload data to be inserted in a transmission. In other words, for DL transmissions, the central unit may first buffer payload data at the remote unit apparatus and then use the control information to instruct the transmission selection unit at the remote unit to insert certain amounts of data from the buffer into transmissions. For example, new data may be inserted for new transmissions after a prior transmission has been successful. The control information may then comprise information on the amount of data, e.g. in terms of a data packet size, to be inserted or provided to the first means for communicating in case of a prior successful transmission. In a similar manner, the control information may comprise information on data to be inserted for retransmissions, e.g. information on the amount of data and information on a redundancy version to be used.

Embodiments may also provide a base station transceiver comprising the above described remote unit apparatus and/or the above described central unit apparatus.

Embodiments, considering an implementation in LTE or LTE-A may provide an extra processing and communication time budget of 8ms in the case of Frequency Division Duplex (FDD) mode and even more in Time Division Mode (TDD), which can e.g. be used to relax the CU-RU communication latency constraint from ∼0.1 ms to up to 4ms one way, which equals 8ms Round Trip Time (RTT). Embodiments may therewith allow to keep the end-to-end latency as low as with an integrated eNBs.

Embodiments further provide a method for a RU of a base station transceiver in a mobile communication system. The base station transceiver comprises a CU and the RU. The method comprises communicating with a mobile transceiver associated to the RU and communicating with the CU to receive control information from the CU. The control information comprises information on a retransmission of data between the RU and the mobile transceiver. The method further comprises determining whether a data transmission between the RU and the mobile transceiver has failed and initiating a retransmission of data, for which a failed data transmission was determined, based on the control information.

Embodiments further provide a method for a CU of a base station transceiver in a mobile communication system. The base station transceiver comprises the CU and a RU. The method comprises generating control information. The control information comprises information on a retransmission of data between the RU and a mobile transceiver. The method further comprises providing the control information to the RU for enabling the RU to decide on a data retransmission based on the control information when a failed data transmission between the remote unit and the mobile transceiver is determined.

Embodiments further provide a computer program having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Fig. 1 shows an embodiment of a base station transceiver, which comprises an embodiment of a remote unit apparatus and an embodiment of a central unit apparatus;
Fig. 2 illustrates a protocol stack of an embodiment;
Fig. 3 shows a block diagram of an embodiment of a method for a remote unit; and
Fig. 4 shows a block diagram of an embodiment of a method for a central unit.

### Description of some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

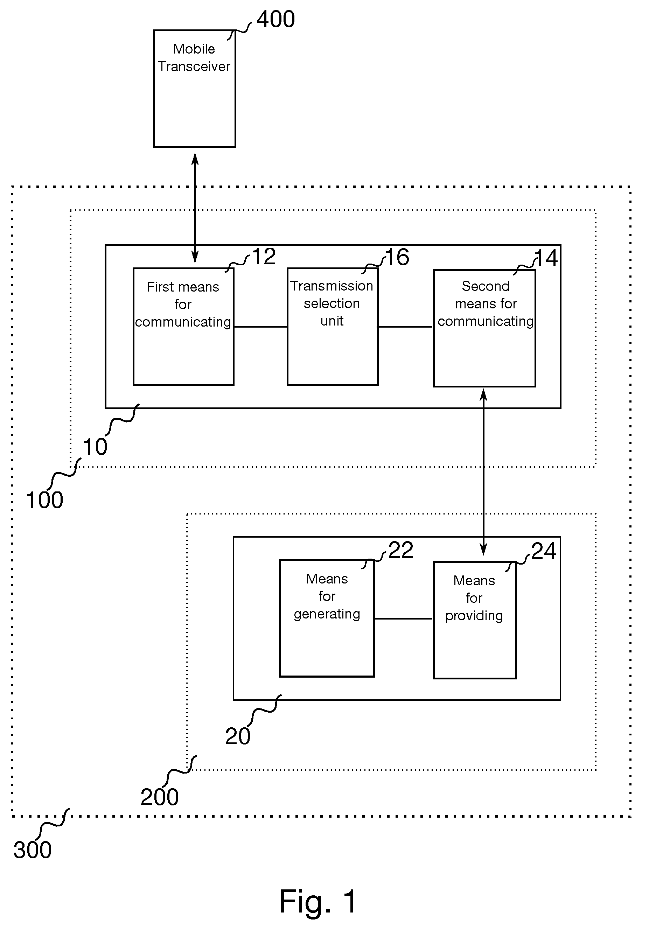

In the following figure optional components are shown using dotted or dashed lines. Fig. 1 shows an embodiment of a base station transceiver 300, which comprises a remote unit 100 with an embodiment of a remote unit apparatus 10 and a central unit 200 with an embodiment of a central unit apparatus 20. Moreover, Fig. 1 depicts a mobile transceiver 400.

The apparatus 10 for the remote unit 100 of the base station transceiver 300 comprises first means 12 for communicating with the mobile transceiver 400 associated to the remote unit 100. The communication is symbolized by the double sided arrow. The remote unit apparatus 10 further comprises second means 14 for communicating with the central unit 200, which is also symbolized by a double sided arrow. The second means is operable to receive control information from the central unit 200. The control information comprises information on a retransmission of data between the remote unit 100 and the mobile transceiver 400. The remote unit apparatus 10 further comprises a transmission selection unit 16, which is coupled to the first means for communication 12 and which is coupled to the second means for communicating 14. The transmission selection unit 16 is operable to determine whether a data transmission between the remote unit 100 and the mobile transceiver 400 has failed. The transmission selection unit 16 is further operable to initiate a retransmission of data, for which a failed data transmission was determined, at the first means 12 for communicating based on the control information.

The embodiment of the apparatus 20 for the central unit 200 of the base station transceiver 300 comprises means for generating 22 the control information, which comprises information on the retransmission of data between the remote unit 100 and the mobile transceiver 400. The central unit apparatus 20 further comprises means for providing 24 the control information to the remote unit 100 for enabling the remote unit 100 to decide on a data retransmission based on the control information when a failed data transmission between the remote unit 100 and the mobile transceiver 400 is determined. As further shown in Fig. 1 the means for generating 22 is coupled with the means for providing 24.

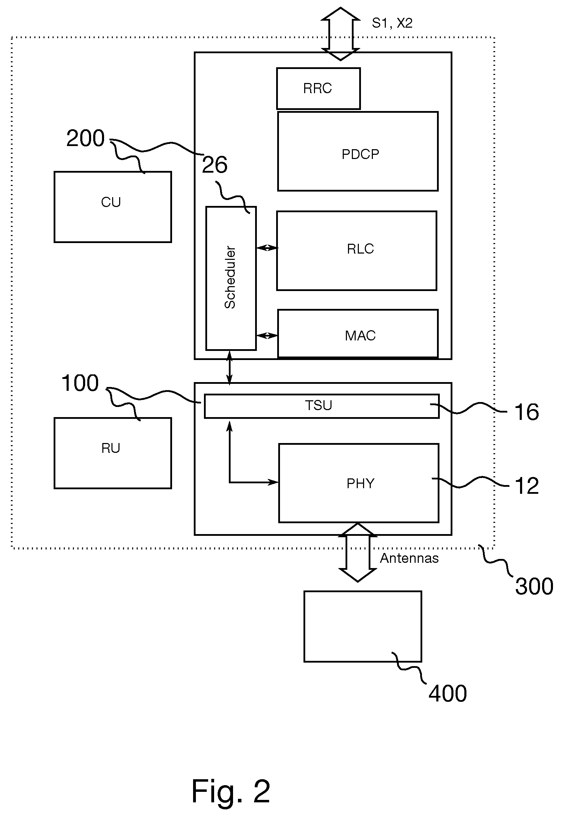

Fig. 2 illustrates a protocol stack of an embodiment, in which an eNB 300 is composed of a CU 200 and an RU 100. Fig. 2 shows an embodiment of the CU 200 with a block diagram of its protocol stack on the right. The protocol stack comprises Radio Resource Control (RRC), Packet Data Convergence Protocol (PDCP), Radio Link Control (RLC), and at least parts of Medium Access Control (MAC). Details of these protocols can be found in the respective 3GPP specifications. Moreover, the CU 200 comprises a scheduler for allocating radio resources for transmissions between the RU 100 and the mobile transceiver 400. Fig. 2 also shows that the CU 200 may use, in line with the 3GPP specifications, the S1 or X2 interface for communicating with the Core Network (CN) or other CUs or eNBs, respectively. Fig. 2 also depicts an embodiment of the RU 100 with a block diagram of its protocol stack on the right. The RU 100 comprises the transmit selection unit 16 and PHY 12, which uses one or more antennas to communicate radio signals with the mobile transceiver 400. The first means for communicating 12 is implemented as PHY in this embodiment.

In the present embodiment the functionality split of the eNB 300 and the respective assignment to the CU 200 and the RU 100, respectively, takes place within the MAC layer, cf. Fig. 2. S1 and X2 are the LTE/LTE-A interfaces of the eNB 300 towards the EPC (S1) and other eNBs (X2), respectively.

The scheduler 26 is located in the CU 200 and corresponds to the means for allocating 26 radio resources for a transmission of data between the remote unit 100 and the mobile transceiver 400. In line with the above, the means for providing 24 is operable to provide information on allocated radio resources to the remote unit 100, which is indicated by the double sided arrow. The scheduling allocations, i.e. the radio resources, may correspond to a set of Physical Resource Blocks (PRBs) that a transport block in the PHY layer occupies. A PRB may correspond to a combination of sub-carriers and symbols or time slots in an OFDM system.

The transmission selection unit 16 is operable to determine whether a data transmission has failed based on a cyclic redundancy check of data received from the mobile transceiver 400. In other words, in the UL a selection criterion may correspond to identifying whether a specific UL transmission, i.e. a transport block, passes a CRC check or not. The transmission selection unit 16 is further operable to determine whether a data transmission has failed based on a negative acknowledgment information received from the mobile transceiver 400. In other words, in the DL the selection criterion may correspond to identifying a specific HARQ ACK/NACK received in the UL.

In the CU 200, the protocol layers operate as in an integrated eNB, where in the present embodiment there are some exceptions. The MAC layer is able to send at least two alternative MAC Protocol Data Units (PDUs) to the TSU 16 in the RU 100 per DL scheduling allocation. Hence, the control information comprises two payload data packets, one payload data packet for a retransmission in case that a prior transmission has failed, and one payload data packet for a new transmission in case a prior transmission has succeeded. One PDU corresponds to the PDU that is transmitted to the mobile transceiver 400 in case of a retransmission, the other PDU corresponds to a PDU for a new transmission. Hence, the second means 14 for communicating is operable to receive control information for a transmission of new data and the TSU 16 is operable to indicate a new transmission to the first means 12 for communicating (PHY) when a data transmission between the remote unit 100 and the mobile transceiver 400 was successful. Moreover, the second means 14 for communicating is operable to receive payload data for transmission from the remote unit 100 to the mobile transceiver 400. The TSU 16 is operable to provide the payload data for a new transmission to the PHY 12 when a data transmission from the remote unit 100 to the mobile transceiver 400 was successful.

Hence, in the CU 200 the means for providing 24 is operable to provide control information for a transmission of new data and payload data for transmission from the remote unit 100 to the mobile transceiver 400 to the remote unit 100.

Aside from these aspects the MAC layer equals the MAC layer of an integrated eNB. The scheduler 26 is able to generate at least two sets of control information plus an associated selection criterion per each DL and UL scheduling allocation. In the RU 100, the PHY 12 layer operates as in an integrated eNB.

In the embodiment the TSU 16 operates as follows. Depending on the value identified by the selection criterion it forwards one of the associated alternative sets of control information plus in the DL one of the MAC PDUs to the PHY layer 12 and discards the other(s) MAC PDUs. In other words, the TSU 16 decides on whether a retransmission or a new transmission is carried out and forwards the respective PDU to PHY 12.

Note that in opposite direction from PHY 12 upwards, data, i.e. MAC PDUs in the UL, and control, i.e. the values of received HARQ ACK/NACKs and CRC check results, are forwarded unmodified through the TSU 16 to the MAC and to the scheduler 26, respectively. In other words, the TSU 16 is operable to indicate to the second means 14 for communicating that a retransmission was indicated to the PHY 12 and the second means 14 for communicating is operable to transmit information on the indication on the retransmission to the central unit 200, more precisely, to the scheduler 26 in the CU 200.

The TSU 16 is further operable to indicate to the second means 14 for communicating that a new transmission was indicated to the PHY 12 and the second means 14 for communicating is operable to transmit information on the indication of the new transmission to the central unit 200, more precisely, to the scheduler 26 in the CU 200. Thus, the central unit 200 comprises means for receiving information on an indication on a retransmission between the remote unit 100 and the mobile transceiver 400 from the remote unit 100. The means for receiving is operable to receive information on an indication of a new transmission between the remote unit 100 and the mobile transceiver 400 from the remote unit 100.

In the embodiment, the selection criterion as part of the control information, instructs the TSU 16 to distinguish, for DL transmission, between a received ACK and a NACK, and for UL transmission between a successful CRC check of the received UL transmission and a failed CRC check. Optionally, NACK and Discontinuous Transmission (DTX), i.e. nothing/no energy received, can be further distinguished. In the event of a received ACK or if the CRC check was successful, the TSU 16 schedules the transmission of new data. In the event of a NACK or if the CRC check failed, the TSU 16 schedules the retransmission with a next redundancy version. In embodiments the control information can therefore comprise information on the redundancy version. Finally, in case of DTX, if DTX and NACK are further distinguished, the transmission may be restarted instead with redundancy version 0.

To let the TSU 16 be a pure select-and-forward operation in some embodiments the scheduling flexibility can be reduced. The simplest and most straight forward scheduling constraint is to fit all alternative transmissions into the same time frequency resource blocks, i.e. the same Control Channel Elements (CCEs) within the PDCCH for the DCIs and the same PRBs within the Physical Downlink/Uplink Shared Channel (PDSCH, PUSCH) can be allocated.

In further embodiments, in order to change the amount of resources allocated to a UE 400, a HARQ process can be suspended until the actual HARQ ACK/NACK (DL) respectively CRC check result (UL) is known to the CU 200. This is similar to the above concept of faked ACK, but the additional latency is introduced only for the last transmission before the occurrence of a change. In another embodiment a new transmission may not be scheduled, i.e. resources are left unused in the event of a successful retransmission. It is to be noted that the location in the frequency domain within a sub-frame can be changed at any time without impact, i.e. frequency selective scheduling is not limited.

Optionally in some embodiments, to mitigate the problem of an increased data rate between CU 200 and RU 100 due to sending DL MAC PDUs at least twice, user data, i.e. all RLC Service Data Units (SDUs), can be removed from the DL MAC PDUs and replaced by a set of insertion instructions. User data is then transmitted from CU 200 to RU 100 in advance independent of the control information and stored at the RU 100 for later use. The means for providing 24 at the CU 200 is operable to provide payload data for transmission from the RU 100 to the UE 400 to the RU 100 in advance to enable payload data buffering at the RU 100. The remote unit apparatus 10 then comprises a data buffer for buffering payload or user data. The control information comprises information on payload data to be inserted in a transmission. The CU 200 only records the amount of user data now buffered in the RU 100, but needs not to buffer the user data itself. The buffer at the RU 100 is under full control of the CU 200. Before forwarding a DL MAC PDU to the PHY 12, the TSU 16 may then execute the insertion instructions, inserting user data from the buffer into the MAC. In the event that the amount of user data is small, one can fall back to sending complete MAC PDUs including user data. As an example, a set of insertion instructions could be defined as follows, with (X)* meaning X repeated zero or more times:
set_of_insertion_instructions:
   buffer_id insertion_instruction (insertion_instruction)* insertion_instruction:
      packet_offset buffer_start buffer_length (buffer_start buffer_length)*
semantic:
   at each packet_offset within received MAC PDU, insert from buffer_id starting at buffer_start buffer_length bytes

The advantage of separating control and user data may be that the relatively high bandwidth user data is always sent only once and in advance outside of the timing critical CU-RU control loop. The control traffic can thereby be better prioritized for its transmission on the CU-RU link due to its relatively low bandwidth compared to combined control & user data, enabling further reduction of CU-RU communication latency. The drawback could be increased complexity due to the required remote buffer management. Note that in some embodiments in the UL, all successfully received user data may be simply forwarded to the CU 200 for further processing by the MAC and RLC layer as in an integrated eNB.

Optionally in some embodiments the CU 200 may configure the RU 100 or the TSU 16 therein to react to transmissions for which no selection criterion was provided as part of the control information. In one embodiment, according to an in-advance-configuration through the CU 200, the RU 100 or the TSU 16 may either schedule a retransmission or suspend a HARQ process in the case that it has not received from the CU 200 a selection criterion as part of the control information for one or more, for DL transmission, received ACK/NACKs, and for UL transmission CRC check results. In a further embodiment, the RU 100 or TSU 16 may schedule transmissions on all resources that remain unused after all instructions received from the CU 200 have been executed. That is to say, in some embodiments both RU 100 and CU 200 may have a scheduler, each responsible for scheduling a different subset of a plurality of mobile transceivers 400 that are served by that base station transceiver 300. For example, a CU 200 may schedule mobile stations 400 for joint transmission and/or reception by a plurality of RUs 100, so-called Coordinated Multipoint transmission and reception (CoMP), while the RUs 100 schedule non-CoMP mobile stations 400 on the remaining unused resources, i.e. for which no selection criterion as part of the control information has been received from the CU 200.

In embodiments the RU 100 or TSU 16 may be operable to suspend HARQ processes for which no control information was provided, indicate retransmissions for a transmission for which no control information was provided, or schedule mobile transceivers, which are assigned to a scheduler allocated in the RU 100. In other words, the TSU 16 can be operable to initiate a retransmission, suspend a transmission or schedule data of another mobile transceiver for data for which a failed data transmission was determined and for which the control information lacks information on a retransmission. That is to say, for a DL transmission for which the control information does not provide any information on a retransmission, the TSU 16 may be configured by the CU 200 to initiate a retransmission. For an UL transmission, for which the control information does not provide any information on a retransmission, the TSU 16 may be configured by the CU 200 to suspend a transmission, e.g. to suspend a corresponding HARQ process. In further embodiments, the TSU 16 may schedule data of another mobile transceiver for data, for which a failed data transmission was determined and for which the control information lacks information on a retransmission.

In a further more advanced embodiment, multiple scheduling allocations are handled together. For example, assume N Voice over Internet Protocol (VoIP) UEs with only a single packet at a time, i.e. no more new data. Assuming an expected HARQ retransmission probability p, resources of N*p UEs are scheduled for retransmissions, and are moved by adaptive retransmission to be consecutive in frequency, allowing the resources of the remaining N*(1-p) UEs to be allocated to one or multiple different (latency tolerant) UE(s) with differently sized scheduling allocations. This RU 100 then includes means to resolve possible DCI allocation conflicts in the PDCCH by moving DCI within PDCCH. Furthermore, if less than q<p UE need to retransmit, resources of p-q UEs stay unused. If r>p UEs need to retransmit, either suspend r-p UEs (increased latency or lost packet if end-to-end latency budget depleted) or some of the resources of N-r UEs stay unused (depending on allocation granularity of the UEs to be scheduled therein).

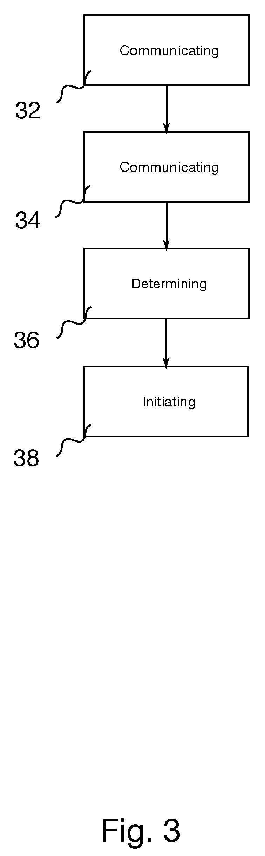

Fig. 3 shows a block diagram of an embodiment of a method for a remote unit 100 of a base station transceiver 300 in a mobile communication system. The method comprises communicating 32 with the mobile transceiver 400 associated to the remote unit 100 and communicating 34 with the central unit 200 to receive control information from the central unit 200. The control information comprises information on a retransmission of data between the remote unit 100 and the mobile transceiver 400. The method comprises determining 36 whether a data transmission between the remote unit 100 and the mobile transceiver 400 has failed. The method further comprises initiating 38 a retransmission of data, for which a failed data transmission was determined, based on the control information.

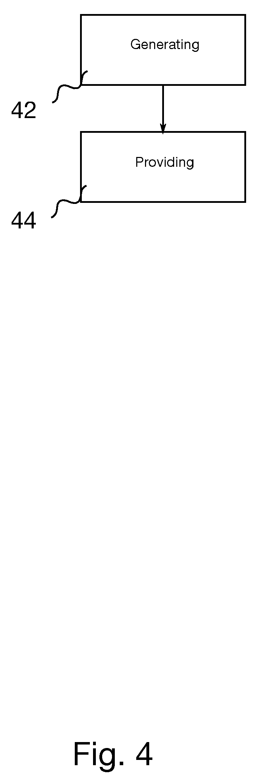

Fig. 4 shows a block diagram of an embodiment of a method for a central unit 200 of a base station transceiver 300 in a mobile communication system. The method comprises generating 42 control information. The control information comprises information on a retransmission of data between the remote unit 100 and the mobile transceiver 400. The method further comprises providing 44 the control information to the remote unit 100 for enabling the remote unit 100 to decide on a data retransmission based on the control information, when a failed data transmission between the remote unit 100 and the mobile transceiver 400 is determined.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in un-derstanding the principles of the invention and the concepts contributed by the inventor(s) to furthering the art, and are to be construed as being without limitation to such specifically recited examples and conditions. Moreover, all statements herein reciting principles, as-pects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for communicating", "means for processing", "means for generating", "means for providing", "means for allocating", "means for receiving" etc., may be provided through the use of dedicated hardware, such as "a communicator", "a processor", "a generator", "a provider", "an allocator", "a receiver", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a remote unit (100) of a base station transceiver (300) in a mobile communication system, the base station transceiver (300) comprising a central unit (200) and the remote unit (100), the remote unit apparatus (10) comprising
first means (12) for communicating with a mobile transceiver (400) associated with the remote unit (100);
second means (14) for communicating with the central unit (200), the second means (14) being operable to receive control information from the central unit (200), the control information comprising information on a retransmission of data between the remote unit (100) and the mobile transceiver (400); and
a transmission selection unit (16) operable to determine whether a data transmission between the remote unit (100) and the mobile transceiver (400) has failed, wherein the transmission selection unit (16) is operable to initiate, based on the control information, a retransmission of data for which a failed data transmission was determined at the first means (12) for communicating.

2. The apparatus (10) of claim 1, wherein the transmission selection unit (16) is operable to determine whether a data transmission has failed based on a cyclic redundancy check of data received from the mobile transceiver (400) and/or wherein the transmission selection unit (16) is operable to determine whether a data transmission has failed based on negative acknowledgment information received from the mobile transceiver (400).

3. The apparatus (10) of claim 1, wherein the control information comprises two payload data packets, one payload data packet for a retransmission and one payload data packet for a new transmission.

4. The apparatus (10) of claim 1, wherein the transmission selection unit (16) is operable to indicate to the second means (14) for communicating that a retransmission was indicated to the first means (12) for communicating, wherein the second means (14) for communicating is operable to transmit information on the indication on the retransmission to the central unit (200).

5. The apparatus (10) of claim 1, wherein the second means (14) for communicating is operable to receive control information for a transmission of new data, and wherein the transmission selection unit (16) is operable to indicate a new transmission to the first means (12) for communicating when a data transmission between the remote unit (100) and the mobile transceiver (400) was successful.

6. The apparatus (10) of claim 5, wherein the transmission selection unit (16) is operable to indicate to the second means (14) for communicating that a new transmission was indicated to the first means (12) for communicating, wherein the second means (14) for communicating is operable to transmit information on the indication of the new transmission to the central unit (200).

7. The apparatus (10) of claim 1, wherein the second means (14) for communicating is operable to receive payload data for transmission from the remote unit (100) to the mobile transceiver (400), and wherein the transmission selection unit (16) is operable to provide the payload data for a new transmission to the first means (12) for communicating when a data transmission from the remote unit (100) to the mobile transceiver (400) was successful, and wherein the apparatus (10) comprises a data buffer for buffering payload data and wherein the control information comprises information on payload data to be inserted in a transmission.

8. An apparatus (20) for a central unit (200) of a base station transceiver (300) in a mobile communication system, the base station transceiver (300) comprising the central unit (200) and a remote unit (100), the central unit apparatus (20) comprising
means for generating (22) control information, the control information comprising information on a retransmission of data between the remote unit (100) and a mobile transceiver (400); and
means for providing (24) the control information to the remote unit (100) for enabling the remote unit (100) to decide on a data retransmission based on the control information when a failed data transmission between the remote unit (100) and the mobile transceiver (400) is determined.

9. The apparatus (20) of claim 8, further comprising means for allocating (26) radio resources for a transmission of data between the remote unit (100) and the mobile transceiver (400), wherein the means for providing (24) is operable to provide information on allocated radio resources to the remote unit (100).

10. The apparatus (20) of claim 8, further comprising means for receiving, wherein the means for receiving is operable to receive information on an indication on a retransmission between the remote unit (100) and the mobile transceiver (400) from the remote unit (100), or wherein the means for receiving is operable to receive information on an indication of a new transmission between the remote unit (100) and the mobile transceiver (400) from the remote unit (100).

11. The apparatus (20) of claim 8, wherein the means for providing (24) is operable to provide control information for a transmission of new data to the remote unit (100) or wherein the means for providing (24) is operable to provide payload data for transmission from the remote unit (100) to the mobile transceiver (400) to the remote unit (100).

12. The apparatus (20) of claim 8, wherein the control information comprises two payload data packets, one payload data packet for a retransmission and one payload data packet for a new transmission and wherein the means for providing (24) is operable to provide payload data for transmission from the remote unit (100) to the mobile transceiver (400) to the remote unit (100) in advance to enable payload data buffering at the remote unit (100) and wherein the control information comprises information on payload data to be inserted in a transmission.

13. A method for a remote unit (100) of a base station transceiver (300) in a mobile communication system, the base station transceiver (300) comprising a central unit (200) and the remote unit (100), the method comprising
communicating (32) with a mobile transceiver (400) associated with the remote unit (100);
communicating (34) with the central unit (200) to receive control information from the central unit (200), the control information comprising information on a retransmission of data between the remote unit (100) and the mobile transceiver (400);
determining (36) whether a data transmission between the remote unit (100) and the mobile transceiver (400) has failed; and
initiating (38), based on the control information, a retransmission of data for which a failed data transmission was determined.

14. A method for a central unit (200) of a base station transceiver (300) in a mobile communication system, the base station transceiver (300) comprising the central unit (200) and a remote unit (100), the method comprising
generating (42) control information, the control information comprising information on a retransmission of data between the remote unit (100) and a mobile transceiver (400); and
providing (44) the control information to the remote unit (100) for enabling the remote unit (100) to decide on a data retransmission based on the control information when a failed data transmission between the remote unit (100) and the mobile transceiver (400) is determined.

15. A computer program having a program code for performing one of the methods of claims 13 or 14, when the computer program is executed on a computer or processor.

## Patentansprüche

1. Einrichtung (10) für eine Ferneinheit (100) eines Basisstation-Transceivers (300) in einem mobilen Kommunikationssystem, wobei der Basisstation-Transceiver (300) eine Zentraleinheit (200) und die Ferneinheit (100) umfasst, und wobei die Ferneinheitseinrichtung (10) umfasst
ein erstes Mittel (12) für das Kommunizieren mit einem mobilen Transceiver (400), der mit der Ferneinheit (100) assoziiert ist;
ein zweites Mittel (14) für das Kommunizieren mit der Zentraleinheit (200), wobei das zweite Mittel (14) betriebsfähig ist zum Empfangen von Kontrollinformation von der Zentraleinheit (200), wobei die Kontrollinformation Information über eine Übertragungswiederholung zwischen der Ferneinheit (100) und dem mobilen Transceiver (400) umfasst; und
eine Übertragungsauswahleinheit (16), die betriebsfähig ist zum Bestimmen, ob eine Datenübertragung zwischen der Ferneinheit (100) und dem mobilen Transceiver (400) fehlgeschlagen ist, wobei die Übertragungsauswahleinheit (16) betriebsfähig ist zum Initiieren, auf Basis der Kontrollinformation, einer Übertragungswiederholung von Daten, für die eine fehlgeschlagene Datenübertragung an das erste Mittel (12) für das Kommunizieren festgestellt worden ist.

2. Einrichtung (10) nach Anspruch 1, wobei die Übertragungsauswahleinheit (16) betriebsfähig ist zum Bestimmen, ob eine Datenübertragung fehlgeschlagen ist, auf Basis einer zyklischen Redundanzprüfung von vom mobilen Transceiver (400) empfangenen Daten und/oder wobei die Übertragungsauswahleinheit (16) betriebsfähig ist zum Bestimmen, ob eine Datenübertragung fehlgeschlagen ist auf Basis einer negativen Empfangsinformation, die vom mobilen Transceiver (400) empfangen worden ist.

3. Einrichtung (10) nach Anspruch 1, wobei die Kontrollinformation zwei Nutzdatenpakete umfasst, ein Nutzdatenpaket für eine Übertragungswiederholung und ein Nutzdatenpaket für eine neue Übertragung.

4. Einrichtung (10) nach Anspruch 1, wobei die Übertragungsauswahleinheit (16) betriebsfähig ist zum Anzeigen an das zweite Mittel (14) für das Kommunizieren, dass das erste Mittel (12) für das Kommunizieren eine Übertragungswiederholung angezeigt worden ist, wobei das zweite Mittel (14) für das Kommunizieren betriebsfähig ist zum Übertragen von Information über das Angeben der Übertragungswiederholung an die Zentraleinheit (200).

5. Einrichtung (10) nach Anspruch 1, wobei das zweite Mittel (14) für das Kommunizieren betriebsfähig ist zum Empfangen von Kontrollinformation für eine Übertragung neuer Daten, und wobei die Übertragungsauswahleinheit (16) betriebsfähig ist zum Anzeigen einer neuen Übertragung an das erste Mittel (12) für das Kommunizieren, wenn eine Datenübertragung zwischen der Ferneinheit (100) und dem mobilen Transceiver (400) erfolgreich war.

6. Einrichtung (10) nach Anspruch 5, wobei die Übertragungsauswahleinheit (16) betriebsfähig ist zum Anzeigen an das zweite Mittel (14) für das Kommunizieren, dass dem ersten Mittel (12) für das Kommunizieren eine neue Übertragung angezeigt worden ist, wobei das zweite Mittel (14) für das Kommunizieren betriebsfähig ist zum Übertragen von Information über das Angeben der neuen Übertragung an die Zentraleinheit (200).

7. Einrichtung (10) nach Anspruch 1, wobei das zweite Mittel (14) für das Kommunizieren betriebsfähig ist zum Empfangen von Nutzdaten für das Übertragen von der Ferneinheit (100) zum mobilen Transceiver (400), und wobei die Übertragungsauswahleinheit (16) betriebsfähig ist zum Bereitstellen der Nutzdaten für eine neue Übertragung an das erste Mittel (12) für das Kommunizieren, wenn eine Datenübertragung von der Ferneinheit (100) zum mobilen Transceiver (400) erfolgreich war, und wobei die Einrichtung (10) einen Datenpuffer zum Puffern der Nutzdaten umfasst und wobei die Kontrollinformation Information über Nutzdaten umfasst, die in eine Übertragung eingefügt werden müssen.

8. Einrichtung (20) für eine Zentraleinheit (200) eines Basisstation-Transceivers (300) in einem mobilen Kommunikationssystem, wobei der Basisstation-Transceiver (300) die Zentraleinheit (200) und eine Ferneinheit (100) umfasst, wobei die Zentraleinheitseinrichtung (20) umfasst
Mittel zum Erzeugen (22) von Kontrollinformation, die Kontrollinformation Information über eine Übertragungswiederholung von Daten zwischen der Ferneinheit (100) und einem mobilen Transceiver (400) umfasst; und
Mittel zum Bereitstellen (24) der Kontrollinformation für die Ferneinheit (100) zum Ermöglichen der Ferneinheit (100) zum Entscheiden hinsichtlich einer Datenübertragungswiederholung auf Basis der Kontrollinformation, wenn eine fehlgeschlagene Datenübertragung zwischen der Ferneinheit (100) und dem mobilen Transceiver (400) festgestellt wird.

9. Einrichtung (20) nach Anspruch 8, weiterhin umfassend Mittel zum Zuteilen (26) von Funkressourcen für eine Übertragung von Daten zwischen der Ferneinheit (100) und dem mobilen Transceiver (400), wobei das Mittel zum Bereitstellen (24) betriebsfähig ist zum Bereitstellen von Information über zugeteilte Funkressourcen an die Ferneinheit (100).

10. Einrichtung (20) nach Anspruch 8, weiterhin umfassend Mittel zum Empfangen, wobei das Mittel zum Empfangen betriebsfähig ist zum Empfangen von Information über ein Angeben einer Übertragungswiederhalung zwischen der Ferneinheit (100) und dem mobilen Transceiver (400) von der Ferneinheit (100), oder wobei das Mittel zum Empfangen betriebsfähig ist zum Empfangen von Information über ein Angeben einer neuen Übertragung zwischen der Ferneinheit (100) und dem mobilen Transceiver (400) von der Ferneinheit (100).

11. Einrichtung (20) nach Anspruch 8, wobei das Mittel zum Bereitstellen (24) betriebsfähig ist zum Bereitstellen von Kontrollinformation für eine Übertragung von neuen Daten auf die Ferneinheit (100) oder wobei das Mittel zum Bereitstellen (24) betriebsfähig ist zum Bereitstellen von Nutzdaten für die Übertragung von der Ferneinheit (100) zum mobilen Transceiver (400) und zur Ferneinheit (100).

12. Einrichtung (20) nach Anspruch 8, wobei die Kontrollinformation zwei Nutzdatenpakete umfasst, ein Nutzdatenpaket für eine Übertragungswiederholung und ein Nutzdatenpaket für eine neue Übertragung und wobei das Mittel zum Bereitstellen (24) betriebsfähig ist zum Bereitstellen von Nutzdaten für die Übertragung von der Ferneinheit (100) zum mobilen Transceiver (400) und zur Ferneinheit (100) im Voraus, um eine Nutzdatenpufferung an der Ferneinheit (100) zu ermöglichen und wobei die Kontrollinformation Information über die Nutzdaten umfasst, die in eine Übertragung eingefügt werden müssen.

13. Verfahren für eine Ferneinheit (100) eines Basisstations-Transceivers (300) in einem mobilen Kommunikationssystem, wobei der lsasisstations-Transceiver (300) eine Zentraleinheit (200) und die Ferneinheit (100) umfasst, wobei das Verfahren umfasst
Kommunizieren (32) mit einem mobilen Transceiver (400), der mit der Ferneinheit (100) assoziiert ist;
Kommunizieren (34) mit der Zentraleinheit (200) zum Empfangen von Kontrollinformation von der Zentraleinheit (200), wobei die Kontrollinformation Information über eine Übertragungswiederholung von Daten zwischen der Ferneinheit (100) und dem mobilen Transceiver (400) umfasst;
Bestimmen (36), ob eine Datenübertragung zwischen der Ferneinheit (100) und dem mobilen Transceiver (400) fehlgeschlagen ist; und
Initiieren (38), auf Basis der Kontrollinformation, einer Übertragungswiederholung von Daten, für die eine fehlgeschlagene Datenübertragung festgestellt worden ist.

14. Verfahren für eine Zentraleinheit (200) eines Basisstations-Transceivers (300) in einem mobilen Kommunikationssystem, wobei der Basisstations-Transceiver (300) die Zentraleinheit (200) und eine Ferneinheit (100) umfasst, wobei das Verfahren umfasst
Erzeugen (42) von Kontrollinformation, und die Kontrollinformation Information über eine Übertragungswiederholung von Daten zwischen der Ferneinheit (100) und einem mobilen Transceiver (400) umfasst; und
Bereitstellen (44) der Kontrollinformation für die Ferneinheit (100), um der Ferneinheit (100) zu ermöglichen, über eine Datenübertragungswiederholung auf Basis der Kontrollinformation zu entscheiden, wenn eine fehlgeschlagene Datenübertragung zwischen der Ferneinheit (100) und dem mobilen Transceiver (400) festgestellt wird.

15. Computerprogramm mit einem Programmcode zum Durchführen eines der Verfahren nach dem Anspruch 13 oder 14, wenn das Computerprogramm auf einem Computer oder Prozessor ausgeführt wird.

## Revendications

1. Appareil (10) destiné à une unité distante (100) d'un émetteur-récepteur de station de base (300) dans un réseau de communication mobile, l'émetteur-récepteur de station de base (300) comprenant une unité centrale (200) et l'unité distante (100), l'appareil de l'unité distante (10) comprenant :
des premiers moyens (12) de communication avec un émetteur-récepteur mobile (400) associé à l'unité distante (100) ;
des deuxièmes moyens (14) de communication avec l'unité centrale (200), les deuxièmes moyens (14) permettant de recevoir des informations de contrôle en provenance de l'unité centrale (200), les informations de contrôle comprenant des informations sur une retransmission de données entre l'unité distante (100) et l'émetteur-récepteur mobile (400) ; et
une unité de sélection de transmission (16) permettant de déterminer si une transmission de données entre l'unité distante (100) et l'émetteur-récepteur mobile (400) a échoué, dans laquelle l'unité de sélection de transmission (16) permet de lancer, en fonction des informations de contrôle, une retransmission des données pour lesquelles un échec de transmission de données a été déterminé au niveau des premiers moyens (12) de communication.

2. Appareil (10) selon la revendication 1, dans lequel l'unité de sélection de transmission (16) permet de déterminer si une transmission de données à échoué en fonction d'un contrôle de redondance cyclique des données reçues de l'émetteur-récepteur mobile (400) et/ou dans lequel l'unité de sélection de transmission (16) permet de déterminer si une transmission de données a échoué en fonction d'informations d'accusé de réception négatif reçues de l'émetteur-récepteur mobile (400).

3. Appareil (10) selon la revendication 1, dans lequel les informations de contrôle comprennent deux paquets de données de charge utile, un paquet de données de charge utile pour une retransmission et un paquet de données de charge utile pour une nouvelle transmission.

4. Appareil (10) selon la revendication 1, dans lequel l'unité de sélection de transmission (16) permet d'indiquer aux deuxièmes moyens (14) de communication qu'une retransmission a été signalée aux premiers moyens (12) de communication, dans lequel les deuxièmes moyens (14) de communication permettent de transmettre des informations concernant l'indication de la retransmission à l'unité centrale (200).

5. Appareil (10) selon la revendication 1, dans lequel les deuxièmes moyens (14) de communication permettent de recevoir des informations de contrôle pour une transmission de nouvelles données, et dans lequel l'unité de sélection de transmission (16) permet de signaler une nouvelle transmission aux premiers moyens (12) de communication lors du succès d'une transmission de données entre l'unité distante (100) et l'émetteur-récepteur mobile (400).

6. Appareil (10) selon la revendication 5, dans lequel l'unité de sélection de transmission (16) permet d'indiquer aux deuxièmes moyens (14) de communication qu'une nouvelle transmission a été signalée aux premiers moyens (12) de communication, dans lequel les deuxièmes moyens (14) de communication permettent de transmettre des informations concernant l'indication de la nouvelle transmission à l'unité centrale (200).

7. Appareil (10) selon la revendication 1, dans lequel les deuxièmes moyens (14) de communication permettent de recevoir des données de charge utile pour la transmission depuis l'unité distante (100) vers l'émetteur-récepteur mobile (400), et dans lequel l'unité de sélection de transmission (16) permet de fournir les données de charge utile pour une nouvelle transmission aux premiers moyens (12) de communication lors du succès d'une transmission de données de l'unité distante (100) vers l'émetteur-récepteur mobile (400), et dans lequel l'appareil (10) comprend un tampon de données pour stocker les données de charge utile et dans lequel les informations de contrôle comprennent des informations sur les données de charge utile à insérer dans une transmission.

8. Appareil (20) destiné à une unité centrale (200) d'un émetteur-récepteur de station de base (300) dans un réseau de communication mobile, l'émetteur-récepteur de station de base (300) comprenant l'unité centrale (200) et une unité distante (100), l'appareil de l'unité centrale (20) comprenant :
des moyens de génération (22) des informations de contrôle, les informations de contrôle comprenant des informations sur une retransmission de données entre l'unité distante (100) et un émetteur-récepteur mobile (400) ; et
des moyens de fourniture (24) des informations de contrôle à l'unité distante (100) afin de permettre à l'unité distante (100) de décider d'une retransmission de données en fonction des informations de contrôle lorsqu'un échec de transmission de données entre l'unité distante (100) et l'émetteur-récepteur mobile (400) a été déterminé.

9. Appareil (20) selon la revendication 8, comprenant en outre des moyens pour allouer (26) des ressources radio pour une transmission de données entre l'unité distante (100) et l'émetteur-récepteur mobile (400), dans lequel les moyens de fourniture (24) permettent de fournir des informations sur les ressources radio allouées à l'unité distante (100).

10. Appareil (20) selon la revendication 8, comprenant en outre des moyens de réception, dans lequel les moyens de réception permettent de recevoir des informations concernant une indication d'une retransmission entre l'unité distante (100) et l'émetteur-récepteur mobile (400) de l'unité distante (100), ou dans lequel les moyens de réception permettent de recevoir des informations concernant une indication d'une nouvelle transmission entre l'unité distante (100) et l'émetteur-récepteur mobile (400) de l'unité distante (100).

11. Appareil (20) selon la revendication 8, dans lequel les moyens de fourniture (24) permettent de fournir des informations de contrôle pour une transmission de nouvelles données à l'unité distante (100) ou dans lequel les moyens de fourniture (24) permettent de fournir des données de charge utile pour une transmission depuis l'unité distante (100) vers l'émetteur-récepteur mobile (400) à l'unité distante (100).

12. Appareil (20) selon la revendication 8, dans lequel les informations de contrôle comprennent deux paquets de données de charge utile, un paquet de données de charge utile pour une retransmission et un paquet de données de charge utile pour une nouvelle transmission et dans lequel les moyens de fourniture (24) permettent de fournir des données de charge utile pour une transmission depuis l'unité distante (100) vers l'émetteur-récepteur mobile (400) à l'unité distante (100) en avance afin de permettre une mise en mémoire tampon des données de charge utile au niveau de l'unité distante (100) et dans lequel les informations de contrôle comprennent des informations sur les données de charge utile à insérer dans une transmission.

13. Procédé destiné à une unité distante (100) d'un émetteur-récepteur de station de base (300) dans un réseau de communication mobile, l'émetteur-récepteur de station de base (300) comprenant une unité centrale (200) et l'unité distante (100), le procédé comprenant les étapes suivantes :
communiquer (32) avec un émetteur-récepteur mobile (400) associé à l'unité distante (100) ;
communiquer (34) avec l'unité centrale (200) pour recevoir des informations de contrôle de l'unité centrale (200), les informations de contrôle comprenant des informations sur une retransmission de données entre l'unité distante (100) et l'émetteur-récepteur mobile (400) ;
déterminer (36) si une transmission de données entre l'unité distante (100) et l'émetteur-récepteur mobile (400) a échoué ; et
lancer (38), en fonction des informations de contrôle, une retransmission des données pour lesquelles un échec de transmission de données a été déterminé.

14. Procédé destiné à une unité centrale (200) d'un émetteur-récepteur de station de base (300) dans un réseau de communication mobile, l'émetteur-récepteur de station de base (300) comprenant l'unité centrale (200) et une unité distante (100), le procédé comprenant les étapes suivantes :
générer (42) des informations de contrôle, les informations de contrôle comprenant des informations sur une retransmission de données entre l'unité distante (100) et un émetteur-récepteur mobile (400) ; et
fournir (44) les informations de contrôle à l'unité distante (100) afin de permettre à l'unité distante (100) de décider d'une retransmission de données en fonction des informations de contrôle lorsqu'un échec de transmission de données entre l'unité distante (100) et l'émetteur-récepteur mobile (400) a été déterminé.

15. Programme informatique contenant un code de programme destiné à réaliser l'un des procédés selon les revendications 13 ou 14, lorsque le programme informatique est exécuté sur un ordinateur ou un processeur.
